# EUROPÄISCHE PATENTSCHRIFT

(11) **EP 2 233 333 B1**
(45) Veröffentlichungstag und Bekanntmachung des Hinweises auf die Patenterteilung: **06.03.2013**
(21) Anmeldenummer: 10002914.9
(22) Anmeldetag: 19.03.2010
(51) Int. Cl.: B60G 17/08, B60G 17/018

(54) **Verfahren zum Betreiben eines Dämpfers in einem Kraftfahrzeug**
Method for operating a damper in a motor vehicle
Procédé pour l'utilisation d'un amortisseur dans un véhicule automobile

(30) Priorität: 25.03.2009 DE 102009014749
(43) Veröffentlichungstag der Anmeldung: 29.09.2010
(73) Patentinhaber: Audi AG, 85045 Ingolstadt (DE)
(72) Erfinder: Spengel, Hans-Georg, 85113 Böhmfeld (DE)
(74) Vertreter: Patzelt, Heike Anna Maria

(56) Entgegenhaltungen:
- EP-A2- 0 734 891
- US-A1- 2006 229 791

## Beschreibung

Die Erfindung betrifft ein Verfahren zum Betreiben eines Dämpfers, der in einem Kraftfahrzeug einem Rad zugeordnet ist und die Bewegung des Rades gegenüber einem Kraftfahrzeugaufbau (Karosserie) beziehungsweise umgekehrt die Bewegung des Kraftfahrzeugaufbaus gegenüber dem Rad dämpft, und sie betrifft auch ein Kraftfahrzeug, in dem das erfindungsgemässe Verfahren einsetzbar ist.

Es soll sich hierbei insbesondere um einen sogenannten geregelten Dämpfer handeln. Ein geregelter Dämpfer ändert seine Dämpfeigenschaften in Abhängigkeit von der Stromstärke eines Stroms, mit dem er beaufschlagt wird. Die Dämpfeigenschaften lassen sich in Form einer Kennlinie beschreiben, die die Rückstellkraft des Dämpfers in Abhängigkeit von der Geschwindigkeit des Rades gegenüber dem Kraftfahrzeugaufbau und damit der Dämpfergeschwindigkeit wiedergibt. Für die folgende Erfindung ist unerheblich, auf welche Weise der Dämpfer arbeitet, so lange der Dämpfer ein Stromverbraucher ist beziehungsweise einen solchen umfasst.

Die Beaufschlagung des Dämpfers mit Strom erfolgt im Rahmen der Regelung durch ein Steuergerät. Diesem werden Messsignale zugeführt. Typischerweise geben diese Messsignale die Relativstellung des Rades gegenüber dem Kraftfahrzeugaufbau wieder, sie stammen insbesondere von einem sogenannten Höhensensor. Außerdem verarbeitet das Steuergerät in der Regel auch eine Information über die Fahrzeuggeschwindigkeit. Schließlich kann für die Festlegung der Stromstärke, mit der der Dämpfer beaufschlagt wird, durch das Steuergerät auch der zeitliche Ablauf zu berücksichtigen sein, sodass dann eine Zeitmesseinrichtung vorgesehen sein muss. Insofern, als eine solche Zeitmesseinrichtung in eine Steuergeräteeinheit integriert ist, wird vorliegend unter dem Steuergerät die Einheit ohne eine solche Messeinrichtung verstanden.

Für nicht geregelte Dämpfer wurden Dämpferprüfungen eingeführt. Bei einer Dämpferprüfung werden zwei Räder eines Kraftfahrzeugs auf eine Platte gefahren, die in Schwingungen versetzt wird, welche eine Anregung zur Folge haben, d. h. die Räder beginnen mitzuschwingen. Die Amplitude der Schwingung der Räder wird als Maß für die Güte der Dämpfung des Dämpfers herangezogen. Beispielsweise wird eine solche Dämpferprüfung durchgeführt, um zu überprüfen, ob ein Stoßdämpfer ausgetauscht werden muss.

Eine Dämpferprüfung ist bisher an einem Kraftfahrzeug mit einem geregelten Dämpfer, insbesondere einem stufenlos geregelten Kennfelddämpfer, nicht ohne Weiteres möglich. Das Steuergerät veranlasst nämlich, dass unterhalb einer vorbestimmten Geschwindigkeit der Dämpfer nicht bestromt wird, damit das Bordnetz nicht übermäßig belastet wird. Ein Arbeiten des geregelten Dämpfers im Stillstand des Kraftfahrzeugs, zum Beispiel wenn dieses in einem Stau steht, ist ohnehin an sich nicht notwendig. Arbeitet der Dämpfer im Stillstand nicht, kann eine Dämpferprüfeinrichtung jedoch nicht ohne Weiteres ermitteln, ob der geregelte Dämpfer korrekt arbeitet. Eine solche Information wäre aber wichtig, um zu überprüfen, wie sicher ein Fahrzeug ist. Beispielsweise beeinflusst der geregelte Dämpfer den Bremsweg des Kraftfahrzeugs.

Von einzelnen Fahrzeugen, zum Beispiel dem Audi TT mit "magnetic ride", ist es bekannt, dass durch Betätigen eines Bedienelements ein Prüfmodus eingenommen wird, in dem das Steuergerät aktiviert wird und den Dämpfer trotz Stillstand des Kraftfahrzeugs mit Strom beaufschlagt. Es ist aufwändig, muss in einem Kraftfahrzeug extra ein Bedienelement vorgesehen werden, damit eine Dämpferprüfung durchführbar ist. Zudem muss in umständlicher Weise der Fahrzeugführer eingewiesen werden, wie der Prüfmodus hergestellt werden kann, obwohl die Dämpferprüfung für den normalen Fahrzeugführer keine wichtige Angelegenheit darstellt.

Die EP 0 734 891 A2 beschreibt ein Verfahren zum Betreiben eines Dämpfers, bei dem zunächst eine Relativgeschwindigkeit zwischen einem Rad und dem entsprechenden Eckpunkt der Karosserie bestimmt wird, und in Abhängigkeit von der Relativgeschwindigkeit eine Kraft gemäß einer nichtlinearen passiven Funktion bestimmt wird. Weiterhin wird die mittlere Vertikalgeschwindigkeit des Rads bestimmt und in Abhängigkeit davon ein erster Skalierungsfaktor, welcher mit der ermittelten Kraft multipliziert wird, um eine skalierte Kraft zu erhalten. Dann wird das Dämpfungssystem in Abhängigkeit der skalierten Kraft betrieben.

Es ist Aufgabe der Erfindung, eine Dämpferprüfung in einem Kraftfahrzeug zu erleichtern.

Die Aufgabe wird durch ein Verfahren zum Betreiben eines Dämpfers gemäß Patentanspruch 1 sowie durch ein Kraftfahrzeug gemäß Patentanspruch 5 gelöst.

Erfindungsgemäß umfasst das Verfahren, dass unterhalb einer vorbestimmten Geschwindigkeit des Kraftfahrzeugs die Messsignale durch das Steuergerät nach zumindest einem vorbestimmten Kriterium auf das Vorliegen oder Nichtvorliegen einer Dämpferprüfungssituation untersucht werden, wobei bei einem Vorliegen der Dämpferprüfungssituation das Steuergerät den Dämpfer bestromt und bei einem Nichtvorliegen der Dämpferprüfungssituation das Steuergerät den Dämpfer unbestromt lässt.

Im Regelfall, dass keine Dämpferprüfungssituation eintritt, wird somit bei Stillstand oder Quasistillstand des Fahrzeugs Strom gespart, damit das Bordnetz nicht übermäßig belastet wird. Hingegen kann in einer Dämpferprüfungssituation der Dämpfer so betrieben werden, dass eine Aussage über seine Funktionsfähigkeit ermöglicht ist, die ohne Bestromung des Dämpfers nicht gemacht werden kann. Die Erfindung beruht auf der Erkenntnis, dass anhand von Messsignalen, insbesondere solchen von ohnehin in einem herkömmlichen Kraftfahrzeug verbauten Messeinrichtungen, eine Dämpferprüfungssituation erkannt werden kann.

Da eine Einrichtung zur Dämpferprüfung das Rad gegenüber dem Kraftfahrzeugaufbau zum Schwingen bringt, lässt sich die Frequenz der Bewegung des Rades gegenüber dem Kraftfahrzeugaufbau untersuchen. Insbesondere, wenn sie einen gegebenen Grenzwert überschreitet, kann dies Anhaltspunkt für das Vorliegen einer Dämpfungssituation sein. Genauso kann auch die Amplitude dieser Bewegung des Rades gegenüber dem Kraftfahrzeug mit einem gegebenen Grenzwert verglichen werden und ein Überschreiten desselben als Anhaltspunkt für eine Dämpferprüfungssituation herangezogen werden. Zusätzlich kann auch die Zeitdauer, mit der das Rad in vorbestimmter Weise (insbesondere mit einer Frequenz und Amplitude über jeweiligen Schwellwerten) gegenüber dem Kraftfahrzeugaufbau bewegt wird, mit einem Grenzwert verglichen werden. Wird das Rad ausreichend lang in vorbestimmter Weise angeregt, ist dies ein weiterer Anhaltspunkt für das Vorliegen einer Dämpferprüfungssituation. Schließlich kann noch eine Plausibilisierung erfolgen: Ein Kraftfahrzeug umfasst typischerweise jeweils einen Dämpfer zu beiden an der selben Achse angeordneten Rädern. Da das Kraftfahrzeug so auf eine Platte gestellt wird, dass beide Räder gleichzeitig angeregt werden, lässt sich auch zum weiteren Rad an der selben Achse untersuchen, ob ein vorbestimmtes Kriterium gegeben ist, insbesondere können die selben Anhaltspunkte wie zu dem ersten Rad gewonnen werden. Alternativ oder zusätzlich ist es möglich, das Verhalten von Rädern an einer anderen Achse des Kraftfahrzeugs als der des bisher untersuchten zu untersuchen: Genügt die Bewegung eines Rades den selben vorbestimmten Bedingungen nicht (beziehungsweise genügt sie anders definierten vorbestimmten Bedingungen), lässt sich daraus schließen, dass dieses Rad an der anderen Achse nicht angeregt wird, was für eine Dämpferprüfung spricht.

Die oben genannten Anhaltspunkte können einzeln oder in Kombination im Rahmen des vorbestimmten Kriteriums beziehungsweise der vorbestimmten Kriterien gewonnen werden. Bevorzugt müssen die auf die Frequenz, Amplitude und Zeitdauer der Anregung genannten Anhaltspunkte gleichzeitig verwirklicht sein damit eine Dämpferprüfungssituation angenommen wird, besonders bevorzugt muss zudem zumindest anhand von einem weiteren Rad eine Plausibilisierung erfolgen.

Ein geregelter Dämpfer ist an und für sich zum Einsatz ab einer Mindestgeschwindigkeit des Kraftfahrzeugs ausgelegt.

Damit in einer Dämpferprüfungssituation, bei der das Kraftfahrzeug fast oder vollständig stillsteht, eine Aussage über den geregelten Dämpfer gemacht werden kann, kann dieser durch das Steuergerät gemäß einem spezifisch vorgegebenen Prüfmodus bestromt werden, zum Beispiel mit einem konstanten Strom. Auch dann ändert sich die Dämpferkennlinie im Vergleich zum unbestromten Dämpfer.

Alternativ ist es möglich, den Dämpfer durch das Steuergerät so bestromen zu lassen, wie es bei einer Geschwindigkeit oberhalb der vorgegebenen Geschwindigkeit bei ansonsten gleichen (zum Beispiel durch die Messsignale beschreibbaren) Bedingungen erfolgt. Sofern beim Betrieb des Kraftfahrzeugs die Bestromung des Dämpfers in Abhängigkeit von der Geschwindigkeit des Kraftfahrzeugs erfolgt, kann zum Beispiel für die Dämpferprüfungssituation eine bestimmte Geschwindigkeit des Kraftfahrzeugs ausgewählt sein, die in der Dämpferprüfungssituation durch das Steuergerät angenommen, also virtuell verwendet wird.

Das erfindungsgemäße Kraftfahrzeug weist einen Kraftfahrzeugaufbau und gegenüber diesem bewegliche Räder auf, sowie zu zumindest einem Rad einen Dämpfer, der die Bewegung des Rades gegenüber dem Kraftfahrzeugaufbau dämpft. Wie oben beschrieben, soll die Dämpfeigenschaft des Dämpfers durch Beaufschlagung des Dämpfers mit Strom änderbar sein. Ein Steuergerät ist mit dem Dämpfer gekoppelt, um diesen mit Strom zu beaufschlagen. Dem Steuergerät sind Messwerte von einer Messeinrichtung für die Fahrzeuggeschwindigkeit und von zumindest einer weiteren Messeinrichtung zuführbar. Das Steuergerät ist dazu ausgelegt, bei einer (anhand eines Messsignals von der Messeinrichtung für die Fahrzeuggeschwindigkeit mitgeteilten) Fahrzeuggeschwindigkeit unterhalb einer vorbestimmten Geschwindigkeit in Abhängigkeit von den Messwerten der weiteren Messeinrichtung den Dämpfer entweder in einem Dämpferprüfmodus zu bestromen oder in einem Ruhemodus nicht zu bestromen. Der Ausdruck "in Abhängigkeit von Messwerten" ist hierbei so zu verstehen, dass wie bei dem erfindungsgemäßen Verfahren zumindest ein vorbestimmtes Kriterium angelegt wird, durch das festgelegt wird, ob eine Dämpferprüfungssituation angenommen wird oder nicht. Bei Vorliegen dieser Situation wird der Dämpferprüfmodus eingenommen, also der Dämpfer bestromt, bei Nichtvorliegen der Dämpferprüfsituation der Ruhemodus eingenommen und der Dämpfer nicht bestromt.

Das erfindungsgemäße Kraftfahrzeug ermöglicht die Einnahme eines Dämpferprüfmodus ohne Betätigung eines Bedienelements. Vielmehr nimmt das Kraftfahrzeug den Dämpferprüfmodus selbständig ein. Ansonsten wird im Ruhemodus Energie gespart und das Bordnetz nicht belastet.

In an sich bekannter Weise können die weiteren Messeinrichtungen einen dem Rad, zu dem der Dämpfer gehört, zugeordneten Höhensensor umfassen. Dieser gibt als Messwert typischerweise einen die Stellung des Rades gegenüber dem Kraftfahrzeugaufbau angebenden Wert aus. Da auch eine zeitliche Analyse sinnvoll ist, zum Beispiel um eine Frequenz oder eine Zeitdauer ableiten zu können, ist bevorzugt zusätzlich zum Höhensensor auch eine Uhr (ein Zeitgeber) vorgesehen.

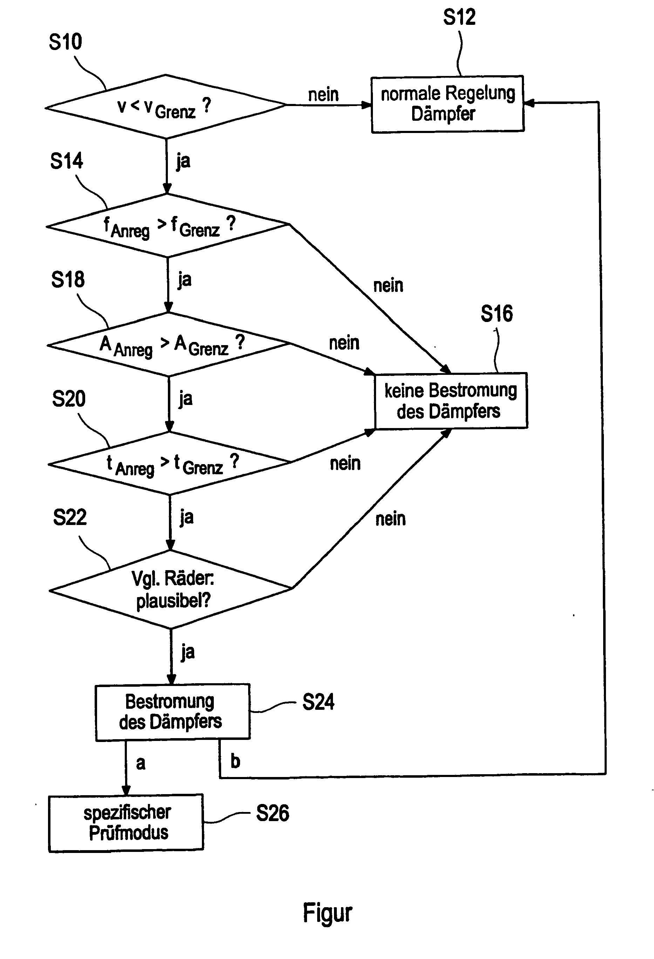

Nachfolgend wird eine bevorzugte Ausführungsform der Erfindung unter Bezug auf die Figur beschrieben, die ein Flussschaubild einer Ausführungsform des erfindungsgemäßen Verfahrens ist.

Das nachfolgend anhand der Figur beschriebene Verfahren wird in einem einem geregelten Dämpfer zugeordneten Steuergerät durchgeführt, insbesondere als ein auf einer Prozessoreinheit ablaufendes Programm. Durch den Dämpfer wird die Relativbewegung zwischen einem Rad und einem Kraftfahrzeugaufbau (Karosserie) eines Kraftfahrzeugs gedämpft.

Das Verfahren dient dazu, eine Reaktion des Steuergeräts bei Durchführung einer Dämpferprüfungssituation zu bewirken. Bei einer Dämpferprüfungssituation stehen Räder einer Achse auf einer schwingenden Platte und werden so zu Schwingungen angeregt.

Dem Steuergerät wird ständig ein Messwert für die Geschwindigkeit v des Kraftfahrzeugs zugeführt. In Schritt S10 wird diese Geschwindigkeit mit einem Grenzwert V_{Grenz} von z. B. 3 km/h verglichen. Fährt das Kraftfahrzeug mit einer Geschwindigkeit oberhalb dieser Grenzgeschwindigkeit v_{Grenz}, so wird der Dämpfer gemäß Schritt S12 in an sich bekannter Weise von dem Steuergerät mit Strom beaufschlagt, es erfolgt also eine normale Regelung.

Falls die Geschwindigkeit des Kraftfahrzeugs kleiner als die Grenzgeschwindigkeit ist, werden aus Signalen eines Höhensensors, der die Relativstellung des Rades gegenüber dem Kraftfahrzeug angibt, Zahlenwerte abgeleitet, nämlich zu einer Anregung unter Anwendung zum Beispiel eines Filterungsverfahrens eine Anregungsfrequenz f_{Anreg}, die Amplitude der Anregung, A_{Anreg}, und es kann eine Zeitdauer t_{Anreg} der Anregung abgeleitet werden.

In Schritt S14 wird die Frequenz der Anregung, f_{Anreg}, mit einer Grenzfrequenz f_{Grenz} verglichen, die zum Beispiel bei 3 Hz liegt. Überschreitet die Anregungsfrequenz die Grenzfrequenz nicht, so wird zu Schritt S16 übergegangen, es wird also für die Zeit, für die die Geschwindigkeit des Kraftfahrzeugs unterhalb der Grenzgeschwindigkeit liegt und gleichzeitig die Anregungsfrequenz kleiner als die Grenzfrequenz ist, die Regelung des Dämpfers ausgesetzt. Ist hingegen die Anregungsfrequenz größer als die Grenzfrequenz, wird die Amplitude der Anregung, A_{Anreg}, in Schritt S18 mit einer Grenzamplitude A_{Grenz} verglichen. Unterschreitet die Amplitude der Anregung eine Grenzfrequenz, so wird abermals zum Schritt S16 übergegangen, der Dämpfer wird nicht bestromt. Überschreitet die Anregungsfrequenz die Grenzfrequenz, wird in Schritt S20 die Zeitdauer der Anregung ermittelt. Zur Festlegung, wann eine Anregung vorliegt, können vorbestimmte Kriterien angewendet werden. Diese können mit den Kriterien gemäß den Schritten S14 und S18 übereinstimmen. In letzterem Fall würden dann die Schritte S14 und S18 gegebenenfalls mehrfach durchlaufen, jeweils ein Zähler für die Zeit nach oben gesetzt, und wenn dieser Zähler einen vorbestimmten Wert erreicht, mit dem Verfahren fortgefahren. Solange die Zeitdauer der Anregung nicht den Grenzwert t_{Grenz} überschreitet, wird der Dämpfer gemäß Schritt S16 nicht bestromt. Sobald aber die Anregung ausreichend lang erfolgte, und zwar mit ausreichender Frequenz und Amplitude, erfolgt in Schritt S22 eine Plausibilitätsprüfung: Es wird verglichen, was zu anderen Rädern an Messwerten aufgenommen wurde. Befinden sich zwei Räder, denen jeweils ein geregelter Dämpfer zugeordnet ist, an ein und der selben Achse, so kann nur dann davon ausgegangen werden, dass sich das Kraftfahrzeug auf einer Dämpferprüfungseinrichtung befindet, wenn beide Räder gleichermaßen angeregt werden. Für das zweite Rad können dann gegebenenfalls die Schritte S14 bis S20 ebenfalls durchgeführt werden. Genauso kann auch an einem anderen Rad, nämlich an einer anderen Achse des Kraftfahrzeugs, überprüft werden, ob dieses gerade nicht eine Anregung erfährt. Geht eine Anregung nämlich auf eine Dämpferprüfungseinrichtung zurück, so wird im Regelfall ausschließlich eine Achse des Kraftfahrzeugs zum Schwingen gebracht, und die andere ruht. Ergibt die Plausibilitätsprüfung, dass nicht notwendigerweise von einer Dämpferprüfungssituation ausgegangen werden kann, so erfolgt gemäß Schritt S16 ebenfalls beziehungsweise nach wie vor keine Bestromung des Dämpfers.

Sind hingegen die Schritte S10, S14, S18, S20 und schließlich auch der Schritt S22 sämtlich unter positiver Beantwortung des jeweiligen Prüfkriteriums durchlaufen, erfolgt eine Bestromung des Dämpfers gemäß Schritt S24. Die Figur gibt an, in welcher Art und Weise die Bestromung erfolgen kann: Bei einer Alternative a erfolgt die Bestromung gemäß Schritt S26 (der mit Schritt S24 zusammenfallen kann) in einem spezifischen Modus, zum Beispiel kann der Dämpfer mit einem Strom konstanter Stromstärke bestromt werden. Bei einer Alternative b erfolgt gemäß Schritt S12, der dann mit Schritt S24 zusammenfallen kann, die Bestromung des Dämpfers im Rahmen einer normalen Regelung, wie sie auch bei Geschwindigkeiten oberhalb der Grenzgeschwindigkeit v_{Grenz} vorgesehen ist.

Die Reihenfolge der einzelnen Schritte aus dem vorstehend beschriebenen Verfahren ist austauschbar: Beispielsweise können die Schritte S14 und S18 ohne Weiteres vertauscht werden. Insofern die Messung der Dauer der Anregung auf eine sich von den Schritten S14 und S18 lösende Definition des Vorliegens einer Anregung bezogen ist, kann auch Schritt S20 vor oder zwischen die Schritte S14 und S18 gesetzt werden. Schritt S22 muss nicht notwendigerweise den Schritten S14, S18 und S20 nachfolgen.

Das Durchlaufen der Schritte S14, S18, S20 und S22 kann bei Verlangsamung des Fahrzeugs beziehungsweise seinem Stillstehen ausgelöst werden. Genauso ist es auch möglich, dass ständig durch das Steuergerät, zum Beispiel der normalen Regelung, die Anregungsfrequenz, die Anregungsamplitude und vielleicht sogar die Zeitdauer abgeleitet werden, sodass auch Vergleiche wie gemäß den Schritten S14, S18 und S20 vorgesehen bei der normalen Regelung des Dämpfers erfolgen können. Insbesondere in diesem Falle ist es nicht notwendig, dass der Schritt S10 den Schritten S14, S18, S20 und S22 gemeinsam vorausgeht.

Die Erfindung geht von einem Dämpfer aus, der ein Stromverbraucher ist, sodass der Zustand der Nichtbestromung des Dämpfers gemäß Schritt S16 erwünscht ist, solange keine Dämpferprüfungssituation vorliegt.

Die Prinzipien des oben dargestellten Verfahrens können jedoch auch analog angewendet werden, wenn ein geregelter Dämpfer anders als durch Bestromung betrieben wird. Zum Beispiel könnte auch durch Abgabe von reinen Steuersignalen das Ziehen von Strom durch einen gesondert bestromten Dämpfer ausgelöst werden, durch Nichtabgabe solcher Steuersignale bei Stillstand des Kraftfahrzeuges dann unterdrückt werden, um das Bordnetz nicht übermäßig zu belasten, wenn keine Dämpferprüfungssituation vorliegt.

## Patentansprüche

1. Verfahren zum Betreiben eines Dämpfers für die Bewegung eines Rades gegenüber einem Kraftfahrzeugaufbau in einem Kraftfahrzeug, wobei in dem Kraftfahrzeug Messsignale einem Steuergerät zugeführt werden, das unter vorbestimmten Bedingungen den Dämpfer in Abhängigkeit von Messsignalen bestromt,
**dadurch gekennzeichnet, dass**
das Verfahren umfasst, dass unterhalb einer vorbestimmten Geschwindigkeit (v_{Grenz}) die Messsignale durch das Steuergerät nach zumindest einem vorbestimmten Kriterium (S14, S18, S20, S22) auf das Vorliegen oder Nichtvorliegen einer Dämpferprüfungssituation untersucht werden, wobei bei einem Vorliegen der Dämpferprüfungssituation das Steuergerät den Dämpfer bestromt (S24) und bei einem Nichtvorliegen der Dämpferprüfungssituation das Steuergerät den Dämpfer unbestromt lässt (S16).

2. Verfahren nach Anspruch 1, **dadurch gekennzeichnet, dass** das zumindest eine vorbestimmte Kriterium umfasst, dass
a) die Frequenz (f_{Anreg}) der Bewegung des Rades gegenüber dem Kraftfahrzeugaufbau einen vorgegebenen Grenzwert (f_{Grenz}) überschreitet (S14), und/oder
b) die Amplitude (A_{Anreg}) der Bewegung des Rades gegenüber dem Kraftfahrzeugaufbau einen vorgegebenen Grenzwert (A_{Grenz}) überschreitet (S18) und/oder
c) das Rad in vorbestimmter Weise gegenüber dem Kraftfahrzeugaufbau für eine Zeitdauer (t_{Anreg}) bewegt wird, die einen vorgegebenen Grenzwert (t_{Grenz}) überschreitet, und/oder
d) dass die Bewegung eines Rades einer selben Achse des Kraftfahrzeugs ebenfalls den vorbestimmten Bedingungen genügt und/oder die Bewegung eines Rades an einer anderen Achse des Kraftfahrzeugs den vorbestimmten Bedingungen nicht genügt.

3. Verfahren nach Anspruch 1 oder 2, **dadurch gekennzeichnet, dass** das Steuergerät bei Vorliegen der Dämpferprüfungssituation den Dämpfer gemäß einem spezifisch vorgegebenen Prüfmodus bestromt (S26).

4. Verfahren nach Anspruch 1 oder 2, **dadurch gekennzeichnet, dass** das Steuergerät bei einem Vorliegen der Dämpferprüfungssituation den Dämpfer so bestromt (S12), wie es sonst bei einer Geschwindigkeit oberhalb der vorgegebenen Geschwindigkeit (v_{Grenz}) bei ansonsten gleichen Bedingungen erfolgt.

5. Kraftfahrzeug mit einem Kraftfahrzeugaufbau und gegenüber diesem beweglichen Rädern und zu zumindest einem Rad einem Dämpfer, der die Bewegung dieses Rades gegenüber dem Kraftfahrzeugaufbau dämpft, wobei durch Beaufschlagung des Dämpfers mit Strom dessen Dämpfeigenschaft änderbar ist und ein Steuergerät mit dem Dämpfer gekoppelt ist, um diesen mit Strom zu beaufschlagen, wobei dem Steuergerät Messwerte von einer Messeinrichtung für die Fahrzeuggeschwindigkeit und zumindest einer weiteren Messeinrichtung zuführbar sind,
**dadurch gekennzeichnet, dass**
das Steuergerät dazu ausgelegt ist, bei einer Fahrzeuggeschwindigkeit unterhalb einer vorbestimmten Geschwindigkeit in Abhängigkeit von Messwerten der zumindest einen weiteren Messeinrichtung den Dämpfer entweder in einem Dämpferprüfmodus zu bestromen (S24) oder in einem Ruhemodus nicht zu bestromen (S16).

6. Kraftfahrzeug nach Anspruch 5, **dadurch gekennzeichnet, dass** die zumindest eine weitere Messeinrichtung einen dem Rad, zu dem der Dämpfer gehört, zugeordneten Höhensensor umfasst.

7. Kraftfahrzeug nach Anspruch 6, **dadurch gekennzeichnet, dass** die weiteren Messeinrichtungen auch eine Uhr umfassen.

## Claims

1. Method for operating a damper for the movement of a wheel in relation to a motor vehicle body in a motor vehicle, measurement signals being fed in the motor vehicle to a control device which under certain conditions powers the damper on the basis of measurement signals, **characterised in that** the method includes that, below a predetermined speed (vₗᵢₘᵢₜ), the measuring signals are analysed by the control device according to at least one predetermined criterion (S14, S18, S20, S22) for the existence or non-existence of a damper test situation, the control device powering the damper (S24) when the damper test situation exists and the control device leaving the damper unpowered (S16) when the damper test situation does not exist.

2. Method according to claim 1, **characterised in that** the at least one predetermined criterion includes that
a) the frequency (f_{excit}) of the movement of the wheel in relation to the motor vehicle body exceeds a preset limit value (fₗᵢₘᵢₜ) (S14), and/or
b) the amplitude (A_{excit}) of the movement of the wheel in relation to the motor vehicle body exceeds a preset limit value (Aₗᵢₘᵢₜ) (S18), and/or
c) the wheel is moved in a predetermined manner in relation to the motor vehicle body for a time period (t_{excit}) which exceeds a preset limit value (vₗᵢₘᵢₜ), and/or
d) that the movement of a wheel of a same axle of the motor vehicle also satisfies the predetermined conditions and/or the movement of a wheel on another axle of the motor vehicle does not satisfy the predetermined conditions.

3. Method according to either claim 1 or claim 2, **characterised in that**, when the damper test situation exists, the control device powers the damper according to a specifically preset test mode (S26).

4. Method according to either claim 1 or claim 2, **characterised in that**, when the damper test situation exists, the control device powers the damper (S12) as otherwise occurs at a speed above the preset speed (vₗᵢₘᵢₜ) in otherwise like conditions.

5. Motor vehicle comprising a motor vehicle body and wheels which can be moved in relation thereto and, for at least one wheel, a damper which damps the movement of this wheel in relation to the motor vehicle body, it being possible to change the damping behaviour of the damper by supplying power thereto and a control device being coupled to the damper in order to supply it with power, it being possible to feed to the control device measurement values from a measuring apparatus for the vehicle speed and at least one further measuring apparatus, **characterised in that** the control device is designed, at a vehicle speed below a predetermined speed, on the basis of measurement values of the at least one further measuring apparatus, either, in a damper test mode, to power the damper (S24) or, in an idle mode, not to power the damper (S16).

6. Motor vehicle according to claim 5, **characterised in that** the at least one further measuring apparatus comprises a height sensor assigned to the wheel to which the damper belongs.

7. Motor vehicle according to claim 6, **characterised in that** the further measuring apparatus also comprises a clock.

## Revendications

1. Procédé d'actionnement d'un amortisseur pour le déplacement d'une roue par rapport à une carrosserie dans un véhicule automobile, dans lequel, dans le véhicule automobile, des signaux de mesure sont acheminés à un appareil de commande qui, dans des conditions prédéterminées, alimente l'amortisseur en fonction de signaux de mesure,
**caractérisé en ce que**
le procédé implique que, en dessous d'une vitesse prédéterminée (vₗᵢₘ), les signaux de mesure sont étudiés par l'appareil de commande selon au moins un critère prédéterminé (S14, S18, S20, S22) sur la présence ou l'absence d'une situation d'essai d'amortisseur, dans lequel, dans le cas d'une présence de la situation d'essai de l'amortisseur, l'appareil de commande alimente l'amortisseur (S24), et dans le cas d'une absence de la situation d'essai d'amortisseur, l'appareil de commande laisse l'amortisseur non alimenté (S16).

2. Procédé selon la revendication 1, **caractérisé en ce que** le au moins un critère prédéterminé implique que
a) la fréquence (f_{exc}) du déplacement de la roue par rapport à la carrosserie du véhicule automobile dépasse (S14) une valeur limite (fₗᵢₘ) prédéterminée, et/ou
b) l'amplitude (A_{exc}) du déplacement de la roue par rapport à la carrosserie du véhicule automobile dépasse (S18) une valeur limite prédéterminée (Aₗᵢₘ),
c) la roue est déplacée de manière prédéterminée par rapport à la carrosserie du véhicule automobile pendant une période de temps (t_{exc}) qui dépasse une valeur limite prédéterminée (tₗᵢₘ) et/ou
d) le déplacement d'une roue d'un même essieu du véhicule automobile répond également aux conditions prédéterminées et/ou le déplacement d'une roue sur un autre essieu du véhicule automobile ne répond pas aux conditions prédéterminées.

3. Procédé selon la revendication 1 ou 2, **caractérisé en ce que** l'appareil de commande, lors de la présence de la situation d'essai d'amortisseur, alimente (S26) l'amortisseur un mode d'essai spécifiquement prédéterminé.

4. Procédé selon la revendication 1 ou 2, **caractérisé en ce que** l'appareil de commande, lors de la présence de la situation d'essai d'amortisseur, alimente (S12) l'amortisseur de sorte que, du reste à une vitesse supérieure à la vitesse prédéterminée (vₗᵢₘ), cela se fasse dans des conditions autrement similaires.

5. Véhicule automobile avec une carrosserie de véhicule automobile et des roues mobiles par rapport à celle-ci et au moins une roue, un amortisseur, qui amortit le déplacement de cette roue par rapport à la carrosserie du véhicule automobile, dans lequel, par alimentation de l'amortisseur par le courant, sa propriété d'amortissement peut être modifiée et un appareil de commande est couplé à l'amortisseur pour alimenter celui-ci en courant, dans lequel des valeurs de mesure peuvent être acheminées à l'appareil de mesure pour la vitesse du véhicule et au moins à un autre dispositif de mesure,
**caractérisé en ce que**
l'appareil de commande est dimensionné en sorte, lorsque la vitesse du véhicule se trouve en dessous d'une vitesse prédéterminée en fonction de valeurs de mesure du au moins un autre dispositif de mesure, soit d'alimenter l'amortisseur en mode d'essai d'amortisseur (S24), soit de ne pas l'alimenter (S16) en mode de repos.

6. Véhicule automobile selon la revendication 5, **caractérisé en ce que** le au moins un autre dispositif de mesure comprend un capteur de hauteur affecté à la roue, à laquelle l'amortisseur appartient.

7. Véhicule automobile selon la revendication 6, **caractérisé en ce que** les autres dispositifs de mesure comprennent également une horloge.
